# EUROPEAN PATENT APPLICATION

(11) **EP 3 095 569 A1**
(43) Date of publication of application: **23.11.2016**
(21) Application number: 15153810.5
(22) Date of filing: 04.02.2015
(51) Int. Cl.: B28B 7/00, E04H 12/12

(54) **Method of constructing a tower of concrete segments**

(71) Applicant: Hendriks groep BV, 3903 KA Veenendaal (NL)
(72) Inventor: Van Alfen, Jan Hendrik, 3903 KA Veenendaal (NL)
(74) Representative: De Vries & Metman

(57) **Abstract**

Method of constructing a tower with concrete tower segments. After casting and hardening of a first tower segment, a second tower segment is cast coaxially on top of the first tower segment. After hardening the second tower segment is removed from the first tower segment. The step of casting a next segment on top of an earlier cast segment can be repeated until all tower segments have been cast. Subsequently a tower is erected by stacking the tower segments with the same relative position as during casting.

## Description

The invention relates to a method of building a tower, in particular a mast or pylon for a wind turbine, the tower being at least partly formed by stacked concrete segments.

Such concrete elements must accurately be positioned and vertically aligned. To this end US2011107708 and US2014283478 provide methods of post-processing upper edges of annular concrete tower segments to achieve that the upper and lower edges of the elements are in parallel planes. Such methods are laborious, time consuming and expensive.

It is an object of the invention to provide a building method for concrete wind turbine towers with reduced effort for aligning the segments.

The object of the invention is achieved with a method of constructing a tower with concrete tower segments. After casting and hardening of a first tower segment, a second tower segment is cast on top of the first tower segment. After hardening, the second tower segment is removed from the first tower segment. Subsequently a tower is erected by stacking the tower segments with the same relative position as during casting.

The joining edges of the first and second tower segments match in that they have the same width and other dimensions and fit onto each other. With this method adjacent edges of two adjacent tower segments have complementary shapes and irregularities. As a result a higher tower segment will almost automatically be aligned with the adjacent lower tower segment. Time required for leveling the individual tower segments is substantially reduced.

In the erected tower, two adjacent tower segments have the same relevant position as during the step that one of them is cast on top of the other, so each point on the one edge joins the same point of the other edge during casting and in the final tower construction. To ensure this, markings can be applied on the segments during casting. The tower segment that is on top of the other segment during casting can be the lower one.

The step of casting a next tower segment on top of an earlier cast tower segment can be repeated until all tower segments have been cast in the tower or it can be the higher one of the two.

In the field of bridge construction in situ concretizing bridge sections using the end face of a precast section as a headboard of the formwork for a next bridge section is known as the cantilever method. The article "Technisch hoogstandje verkort bouwtijd en verlaagt kosten", in Highlights of hendriks Groep, April 1994, discloses an example of such a method. Hitherto, such methods are not used for segments to be stacked on top of each other.

The tower segments can for example be annular segments with a tubular wall and open upper and lower sides. The tubular wall can for example be cylindrical or polygonal, e.g. polygonal or square with rounded corners. The segments may have concentric upper and lower edges extending in parallel planes, e.g., substantially horizontal planes after construction of the tower. The tubular wall may for example be of constant width. The tubular wall may for example taper, e.g., narrowing down in upward direction.

Optionally, the used edge of the first tower segment can be treated with a retarder to facilitate easy removal of the freshly cast and hardened second tower segment.

The method can start with casting a higher tower segment. After hardening, the higher tower segment should then be turned upside down and a next lower segment should be cast on top of the upwardly pointing lower edge of the higher segment. Alternatively, the method can start with casting a lower tower segment. After hardening, a next higher segment can be cast on top of an upper edge of the lower segment.

The tower segments can for example cast in a formwork comprising an inner mould and an outer mould coaxially spaced from the inner mould by a gap. The gap is bridged at a lower side of the formwork by a matching edge of an earlier cast tower segment.

A modular set-up can be used to form the inner and/or outer mould. For instance, the inner and/or outer mould may comprise corner pieces and flat formwork panels between the corner pieces. The corner pieces may extend over the full height of the formwork. The corner pieces and the formwork panels can be joined to form a closed wall. For tower sections of a larger diameter, larger panels can be used between the same corner pieces. The same corner pieces can be used for forming all tower segments and only the flat panels need to be replaced to cast a tower segment of a different size.

Towers of wind turbines generally narrow down to the top. To build such a tower of concrete segments, higher tower segments are generally of a smaller diameter than lower tower segments. Also the individual tower segments generally narrow down to provide a tower showing a gradual transition from a broad tower base to a slender tower top. To manufacture such narrowing segments, the flat formwork panels may for example narrow down, e.g., in a trapezoidal manner, to form a formwork for annular tower segments of a diameter which decreases from bottom to top.

Optionally, the corner pieces of the inner and/or outer moulds may have the shape of a longitudinal segment of a cylinder. For example four corner pieces can be used having the shape of a quarter cylinder. Between the corner pieces trapezoidal flat panel segments can be used of a desired width. This results in square annular segments with rounded corners.

After erecting the tower, the tower segments can be further stabilized, e.g., by post-tension cables. These post-tension cables can for example be arranged through shafts in the segments forming the walls of the tower or mast. A number of the post-tension cables and shafts may run from the foot to the top of the tower. Optionally, some of the post-tension cables may be tensioned at a lower height.

Optionally, a mortar or a similar binder can be used for further fixating the tower segments.

The method is particularly useful for building a tower or pylon for a wind turbine, e.g., of a multi-megawatt wind turbine which can be as high as, for example, 80 m or more.

The invention will be further explained with reference to the accompanying drawing showing an exemplary embodiment.
- Figure 1:: shows a first step of an exemplary embodiment of the method according to the invention;
- Figure 2-8:: show successive further second steps.

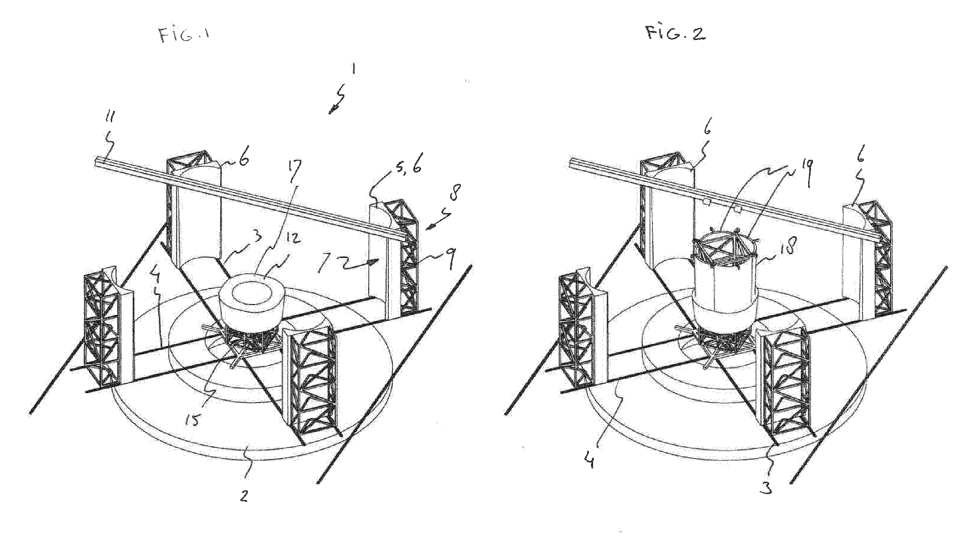

Figure 1 shows a building site 1 for a tower of a wind turbine. In the shown example the building site 1 is formed by a foundation 2 to be used for supporting the wind turbine to be erected. Generally, wind turbines are built in parks with an array of turbines and foundations. One of these foundations can for example be used as a site for in situ casting of the tower segments. The tower segments can also be cast at any other suitable site.

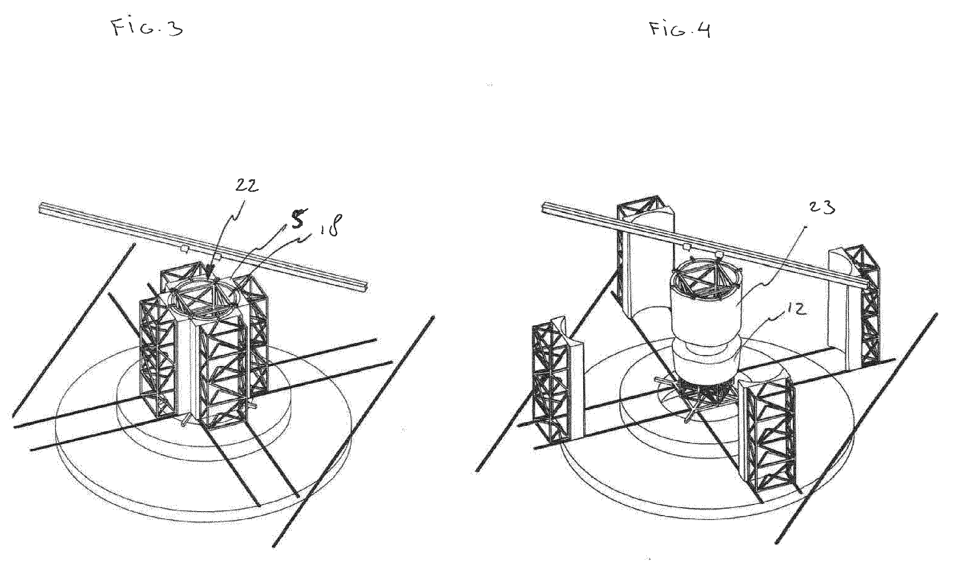

Two pairs of rails 3, 4 cross each other under right angles above the center of the foundation 2. Both pairs of rails 3, 4 carry a pair of symmetrically arranged opposite corner pieces 6 of an outer mould 5 of a formwork (see Figure 3). The corner pieces 6 have the shape of a longitudinal quarter segment of a cylinder. The corner pieces 6 have concave inner sides 7 facing each other and flat back faces 8 supported by a support structure 9. The corner pieces 6 can be moved over the rails 3, 4 into each other direction and back.

An air rail 11 crosses the center of the building site 1 at a level above the corner pieces 6. The air rail 11 is used for transporting cast tower segments.

Centered on the foundation 2 is a spacer 12 on a removable base frame 15. The spacer 12 is used for casting the top tower segment. The spacer 12 fills part of the casting volume so a top tower segment is obtained with a height equal to the height of the mould minus the height of the spacer 12 and the base frame 15.

The upwardly directed edge 17 of the spacer 12 has a diameter corresponding to the diameter of the upper edge of a tower segment that is to be cast.

In a next step, shown in Figure 2, an inner mould 18 is provided via the air rail 11 and positioned coaxially on top of the spacer 12. Like the outer mould 5 the inner mould 18 comprises four corner pieces 19 having the shape of a longitudinal quarter of a cylinder. The corner pieces 19 are bolted together to form the inner mould 18.

After positioning the inner mould 18 the four corner pieces 6 of the outer mould are moved inwardly via the rails 3, 4. The corner pieces 6 are bolted to each other to form the outer mould 5 coaxially enclosing the inner mould 18, as shown in Figure 3. The corner pieces 19 of the inner mould 18 are aligned with the corner pieces 6 of the outer mould 5, leaving a gap 22 between the inner and outer moulds of essentially even width, corresponding to the width of the edge 17 of the top segment 16. The gap 22 forms an annular moulding space with a bottom closed off by the upwardly directed lower edge 17 of the spacer 12. Optionally, the edge 17 can be treated with a retarder.

Wind turbine towers typically have a slightly tapering configuration with a relatively broad base narrowing down to a slender top. To provide a smooth transition from the broad base diameter to the slender top diameter the individual tower segment may each be tapered. To obtain tapering tower segments, flat mould panels 20, 21 are used to space the corner pieces 6, 19 of the inner and outer moulds 5, 18. These panels 20, 21 are trapezoidal with tapered side edges. With a taper angle being about 0 < α ≤ 2° the taper ratio per tower segment will be relatively small and not recognizable in the drawing. The corner elements 6, 19 are slightly inclined to join the inclined side edges of the side flat mould panels 20, 21.

After positioning the inner and outer moulds 5, 18, concrete is cast into the moulding space 22 between the inner and outer moulds 5, 18 and is allowed to harden. After the concrete has hardened the parts of the outer mould 5 are unbolted, the flat panels 20 are taken away and the corner pieces 6 are moved away via the rails 3, 4. Then the inner mould 18 is removed with the freshly cast tower segment 23, as shown in Figure 4.

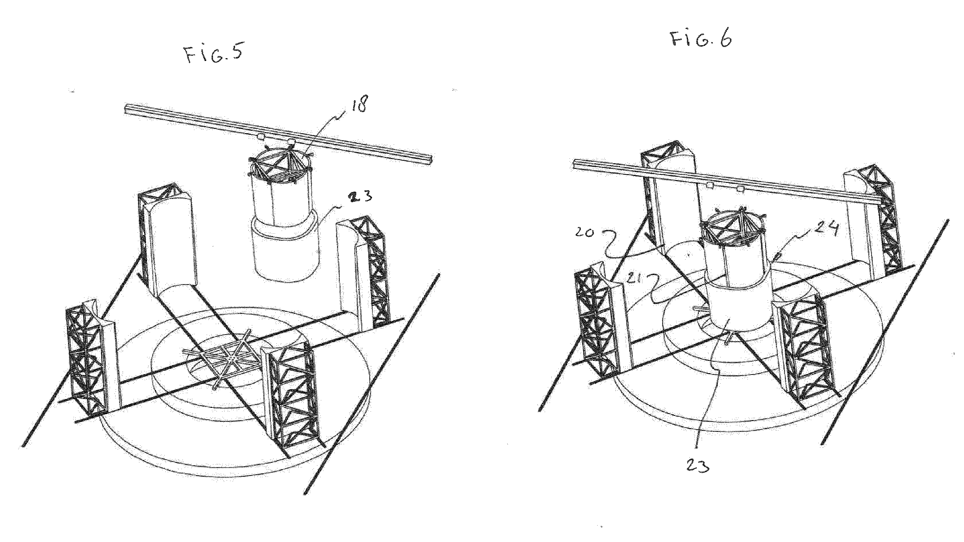

In a next step (Figure 5) the spacer 12 is taken away and the inner mould 18 is released from the cast tower segment 23. The tower segment 23 is positioned upside down centrally on the foundation 2 (Figure 6). Trapezoidal tapered side panels 20, 21 are positioned between the corner segments 6, 19 of the inner and outer moulds 5, 18 to enhance the diameter of the inner and outer moulds 5, 18, so they can be used for casting a next lower tower segment. The taper of these panels is such that the lower diameter of the inner mould corresponds to the largest inner diameter of the earlier cast tower segment 23. This way, the inner and outer moulds 5, 18 accurately join the inner and outer diameter of the upwardly directed lower edge 24 of the last cast tower segment 23 which forms the bottom of the formwork for the new tower segment to be cast. Since the taper angle is quite small the trapezoidal side panels used for casting higher tower segments are actually narrow strips rather than panels.

When the expanded inner and outer moulds 5, 18 are positioned on top of the upwardly directed lower edge 24 of the tower segment 23 concrete is cast in the moulding space between the inner and outer moulds 5, 18 to form a new tower segment of a slightly larger width.

These steps are repeated until all tower segments have been cast.

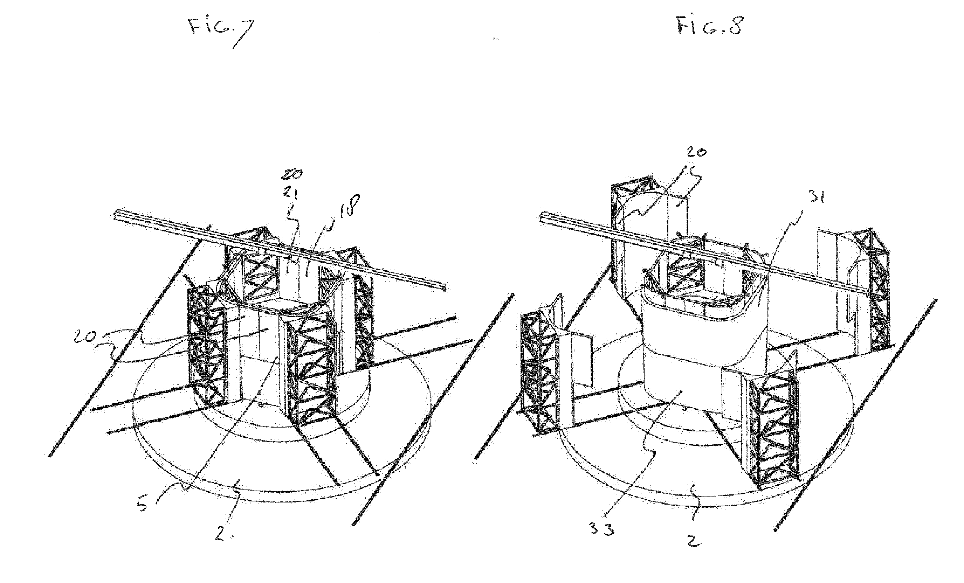

Figures 7 and 8 show the casting of a final tower segment 31, which is used as the lowest tower segment for the tower to be built. The formwork for this segment 31 is formed by the upper edge of the next higher tower segment 33 - here positioned upside down centrally on the foundation 2 - the inner mould 18 expanded by wide tapered panels 21 and the outer mould 5, also expanded by wide tapered panels 20 to obtain a tower segment of a wide diameter, which is more square than circular in cross section.

After the final tower segment 31 has been cast, the lower segment 31 is turned into its regular upright position with the broader side being the lower side. The lower segment is then transported to the site where the tower is to be built. The lower segment 31 is then accurately levelled and aligned, such that its axis is vertical.

After levelling and aligning the lower segment 31, the next tower segment 33 is stacked on top of it with the same relative position as during casting. Consequently, after stacking each point of the upper edge of the lower segment faces the same point of the lower edge of the higher segment as during casting of the lower segment. Since the upper edge of the lower tower segment was cast on top of the lower edge of the next higher tower segment, the two edges are complementary shaped so the second segment will accurately join the lower segment and will automatically also be aligned.

In a next step, the third tower segment is stacked on top of the second segment, again with the same relative position as during casting of the second tower segment. These steps are repeated until all segments of the tower have been stacked. After all tower segments have been stacked pre-tension cables can be used stretched between top segment and the foundation 2 to draw the tower segments firmly against each other.

## Claims

1. Method of constructing a tower with concrete tower segments, wherein after casting and hardening of a first tower segment, a second tower segment is cast coaxially on top of the first tower segment, wherein after hardening the second tower segment is removed from the first tower segment, and wherein subsequently a tower is erected by stacking the tower segments with the same relative position as during casting.

2. Method according to claim 1, wherein the step of casting a next segment on top of an earlier cast segment is repeated until all tower segments have been cast.

3. Method according to claim 1 or 2, wherein the segments are cast in a formwork comprising an inner mould and an outer mould coaxially spaced from the inner mould by a gap, bridged at a lower side of the formwork by a matching edge of an earlier cast tower segment.

4. Method according to claim 3, wherein the inner mould and/or the outer mould comprise corners pieces and flat formwork panels between the corner pieces joined to form a closed wall.

5. Method according to claim 4, wherein the flat formwork panels are trapezoidal.

6. Method according to claim 4 or 5, the corner pieces having the shape of a longitudinal segment of a cylinder, for example a quarter segment.

7. Method according to any preceding claim, wherein the edge of the first segment is treated with a retarder before casting the second segment on top of it.

8. Method according to any preceding claim, wherein the first tower segment is on top of the second tower segment in the final erected tower, wherein the first tower segment is turned upside down before casting the second tower segment on top of its lower edge.

9. Method according to any one of claims 1 - 7, wherein the second tower segment is on top of the first tower segment in the final erected tower and the second segment is cast on top of its upper edge.

10. Method according to any preceding claim, wherein the tower segments are annular segments with an annular upper edge and an annular lower edge extending in parallel planes.

11. Method according to claim 10, wherein the annular segments are tapered.

12. Set of formwork segments for the building method of any preceding claim.
